# EUROPEAN PATENT APPLICATION

(11) **EP 4 194 235 A1**
(43) Date of publication of application: **14.06.2023**
(21) Application number: 22211380.5
(22) Date of filing: 05.12.2022
(51) Int. Cl.: B60G 3/20, B60G 17/016

(54) **VEHICLE, IN PARTICULAR AN AGRICULTURAL VEHICLE, AND CONTROL METHOD FOR HANDLING A STEERING MANOEUVRE OF SUCH A VEHICLE**

(30) Priority: 07.12.2021 IT 202100030878
(71) Applicant: CNH Industrial Italia S.p.A., 10156 Torino (IT)
(72) Inventor: BORGHI, Alberto, 42033 Carpineti (IT); INVERSANI, Alessio, 41030 Cavezzo (Modena) (IT)
(74) Representative: CNH Industrial IP Department

(57) **Abstract**

A vehicle (1), in particular an agricultural vehicle, has a chassis (3) supporting a front axle (7), which is provided with two steerable front wheels (9), and with an independent front suspension (20) for each of the front wheels (9); during a steering manoeuvre, the front wheels defining an inner front wheel (9a) and an outer front wheel (9b), respectively nearer and farther with respect to a steering center (C); the chassis (3) supports a rear axle (8), having two rear wheels (10), and a powertrain arranged to drive at least part of the front and rear wheels (9,10); the front axle (7) has, for each of the front wheels (9), a respective actuator (25), operable to raise and lower the corresponding front wheel (9) with respect to the chassis (3); a control unit (26) is provided to handle the steering manoeuvre by operating at least one of these actuators (25) in response to a steering signal so as to reduce vertical pressure between the inner front wheel (9a) and the ground (27) during the steering manoeuvre.

## Description

### TECHNICAL FIELD

The present invention relates to a vehicle, and in particular to an agricultural vehicle, such as an agricultural tractor.

### BACKGROUND OF THE INVENTION

In agricultural vehicles, a need is felt to minimize the steering radius, in order to optimize the vehicle paths on the ground and, therefore, reduce work times.

Current agricultural vehicles have a conventional transmission that can be controlled by the driver so as to achieve a "four wheel drive" mode or a "two wheel drive" mode, by engaging or disengaging a corresponding clutch device. In the meantime, the steering manoeuvre is strictly constrained by the size and geometric features of the vehicle and by the steering mechanisms, which cannot generally achieve perfect Ackermann steering kinematics when the steering radius is relatively low. In other words, with a low steering radius, the vehicle does not steer with an uniquely defined center of instant rotation, so that at least one of the tires slips on the ground.

Moreover, this slippage effect can be even worse when the vehicle is driven by engaging the "four wheel drive" mode: in this case, the front wheels and the rear wheels are driven simultaneously by the same engine in such a manner that the rotation speed of the front wheels is strictly linked by the transmission features to the rotation speed of the rear wheels, in a way that is usually not optimal in relation to the actual steering radius.

When the agricultural vehicles travel on the soil during work, the above mentioned tire slippage during steering involves a relatively high energy dissipation and causes damages and undesired effects on the soil surface.

Therefore, while the steering radius needs to be reduced as much as possible, at the same time energy dissipation and soil wear and damage need to be minimized during steering. Obviously, this need is felt not only for agricultural vehicles, but more in general by vehicles that, during work or general use, may travel on soil ground.

### SUMMARY OF THE INVENTION

Aim of the present invention is providing a vehicle that is capable to meet the above mentioned needs in a simple manner and can be controlled in an optimized manner when handling the steering manoeuvre.

This aim is achieved by a vehicle, in particular an agricultural vehicle, as defined in the appended claims.

### BRIEF DESCRIPTION OF DRAWINGS

For a better understanding of the present invention, preferred embodiments are described in the following, by way of non-limiting examples, also with reference to the attached drawings wherein:
- Figure 1 is a schematic plan view of a vehicle, in particular an agricultural vehicle, according to an exemplary embodiment of the present invention;
- Figures 2 and 3 are front views schematically showing the vehicle of Figure 1, with a front wheel in a lowered configuration and, respectively, in a raised configuration, with respect to a ground surface;
- Figure 4 is a schematic prospective view schematically showing the vehicle with the above mentioned front wheel in the raised configuration during a steering manoeuvre.

### DETAILED DESCRIPTION OF THE INVENTION

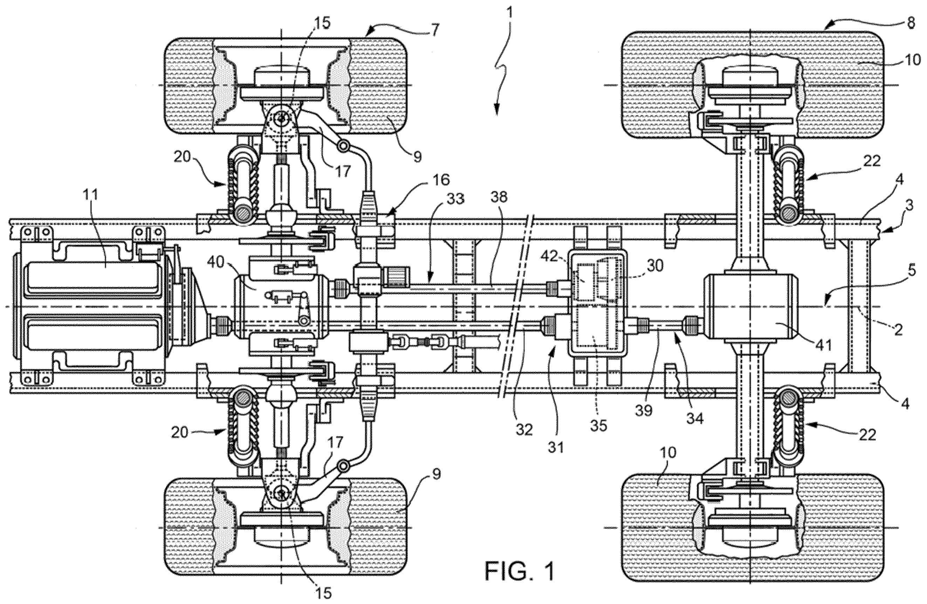

In Figure 1, reference number 1 indicates, as a whole, a vehicle (schematically and partially shown), in particular an agricultural vehicle, such as an agricultural tractor.

Vehicle 1 extends along a longitudinal axis 2 and comprises a chassis 3, in particular comprising two longitudinal members 4 arranged symmetrically with respect to a vertical median longitudinal plane 5 on which the axis 2 lies.

Vehicle 1 further comprises: a front axle 7 and a rear axle 8 supported by the chassis 3 and comprising, respectively, two front wheels 9 and two rear wheels 10; and a powertrain 11 supported by the chassis 3, having at least one motor and/or at least one combustion engine and arranged so as to drive at least some of the vehicle wheels 9,10.

Preferably, vehicle 1 is a four-wheeled vehicle, i.e. it does exactly include four wheels and two axles. More preferably, vehicle 1 is a four wheel drive vehicle: in particular, a four-wheel drive mode and a two-wheel drive mode can be selected by the driver in a known manner, so as to drive all the vehicle wheels 9,10, or only the rear wheels 10, as better explained below with reference to the exemplary embodiment shown in the attached figures.

The front wheels 9 are steerable wheels, i.e. they can turn about respective axes 15 with respect to the chassis 3, so as to steer the vehicle 1 during its movement. For this purpose, vehicle 1 comprises a steering mechanism 16, generally known and not described in detail, connected to steering knuckles 17 of the front wheels 9 and operated by a driver, or by an autonomous driving processing unit, so as to turn the front wheels 9 about the respective axes 15.

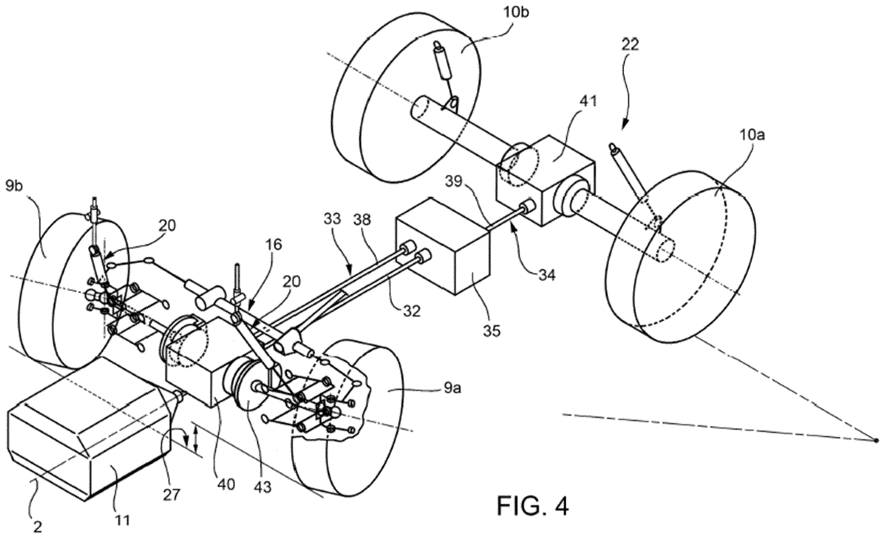

During a steering manoeuvre, with reference to figure 4, the front wheels 9 define an inner front wheel 9a and an outer front wheel 9b, which are respectively nearer and farther with respect to a steering or rotation center C of the vehicle 1.

In analogous manner, the rear wheels 10 define an inner rear wheel 10a and an outer rear wheel 10b, respectively nearer and farther with respect to the center C.

With reference again to figure 1, front axle 7 further comprises, for each of the front wheels 9, a respective front suspension 20, which connects the steering knuckle 17 of the corresponding wheel 9 to the chassis 3. The two front suspensions 20 define an independent suspension system, which is generally known, so that suspensions 20 are not described in detail. As it is known, the term "independent" refers to the vertical motion or path of each wheel with respect to the other wheel of the axle.

In the meantime, rear axle 8 comprises a rear suspension system 22, which is known and not described in detail, and can be designed as an independent suspension system or as a dependent suspension system. In particular, the exemplary and non-limiting embodiment shown in the attached figures, the suspension system 22 comprises a rigid axle suspension.

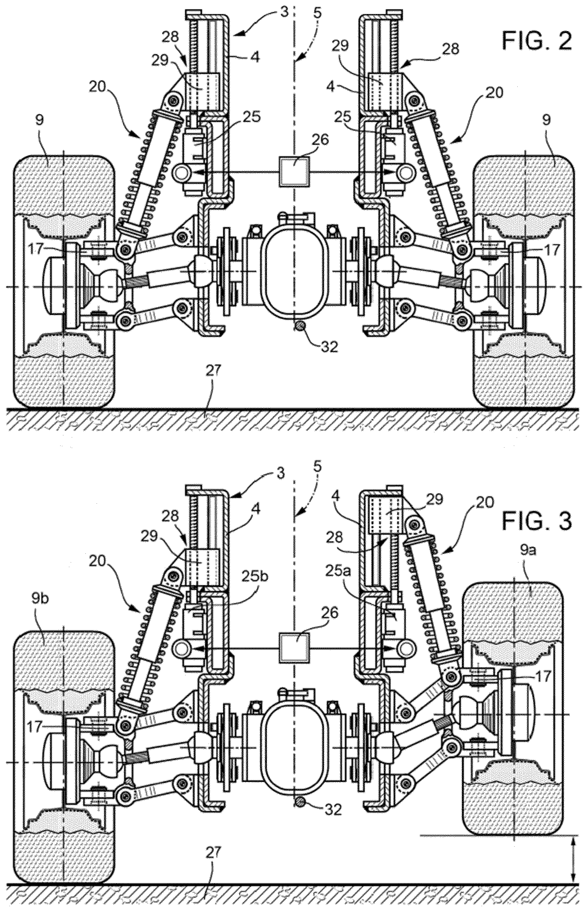

According to the present invention, as schematically shown in figure 2, the front axle 7 further comprises, for each of the front wheels 9, a respective actuator 25, which is operated under the control of a control unit 26 so as to raise and lower the corresponding front wheel 9 with respect to the chassis 3. Actuators 25 may be defined by electric, hydraulic or pneumatic actuators; moreover, they may be defined by linear actuators or by rotating motors.

In the exemplary embodiment shown in figure 2 (and in figure 3), the actuators 25 define parts of respective actuating devices 28, which are distinct from the suspensions 20 and connect the suspensions 20 to the chassis 3 in order to raise and lower the suspension 20 itself, together with the corresponding front wheel 9. Preferably, the actuating devices 28 have to be chosen so as to rigidly and stably maintain a desired e vertical position of the suspensions 20 and the wheels 9 during the vehicle travel. For this purpose, by way of example, the actuating devices 28 comprise respective non-reversible transmissions 29 (e.g. a nut-screw transmission, a non-reversible gear transmission) connecting the suspensions 20 to the chassis 3 and operated by the actuators 25.

According to a different and more preferred embodiment, that is not shown, the actuators 25 define parts, respectively, of the suspensions 20, which therefore are so-called "active suspensions", without the need of additional space, structures and actuators for the connection of the front suspension system to the chassis 3; in other words, in this case the front suspension system is directly connected to the chassis 3 and provides for the active vertical movement and positioning of the wheels 9.

The control unit 26 is an electronic unit which receives information from sensors (not shown) provided on the vehicle 1 so as to handle the steering manouevres of the vehicle 1. According to the present invention, the control unit 26 is configured to control the operation of at least one of the actuators 25, in response to a steering signal, so as to actively vary the vertical positions of the inner and outer front wheels 9a,9b, with respect to each other, in order to actively reduce the vertical pressure between the inner front wheel 9a and the ground during the steering manouevre.

An operation of this kind is shown in figures 3 and 4, in which the actuator 25 associated with the inner front wheel 9a is indicated as 25a, while the actuator 25 associated with the outer front wheel 9b is indicated as 25b: the actuator 25a is operated by the control unit 26 to raise the inner front wheel 9a with respect to the chassis 3 and with respect to the outer front wheel 9b, and/or the actuator 25b is operated by the control unit 26 to lower the outer front wheel 9a with respect to the chassis 3 and with respect to the inner front wheel 9a. The ground is indicated by reference number 27 and, in the shown example, is substantially horizontal; in a more general case, the control strategies implemented in the control unit 26 could also take into consideration the ground inclination and/or the vehicle inclination (e.g. the roll angle about the axis 2) for operating the actuators 26 and reducing vertical pressure of the inner front wheel 9a on the ground 27.

By reducing this vertical pressure, energy dissipation due to tire slip is reduced, when such tire slip occurs during a steering manoeuvre.

Preferably, this kind of operation (i.e. raising the inner front wheel 9a and/or lowering the outer front wheel 9b) is carried out for such an extent to completely detach the inner front wheel 9a from the ground 27. In this configuration, the vehicle 1 behaves just like a three-wheeled vehicle during the steering manoeuvre. By avoiding contacts between the ground 27 and the tire of the inner front wheel 9a, when the ground 27 is defined by soil and the steering radius is relatively low, the soil is not damaged by such a tire.

In particular, the above mentioned steering signal is defined by a signal indicating that a steering manoeuvre has begun or has reached a given steering radius, e.g. thanks to
- one or more sensors (not shown) provided on the steering mechanism 16 and/or on a steering control member (not shown, e.g. a steering column) operable by the driver, and indicating that the steering mechanism 16 has reached a given position or configuration, and/or the vehicle 1 is driven by the driver according to given parameters (e.g. angle and rotating speed of the steering column, etc.); and/or
- one or more sensors (not shown, e.g. GPS and/or gyroscope sensors) indicating the actual position and/or direction and/or path of the vehicle 1; or
- one or more outputs of an autonomous driving processing unit.

In particular, the control unit 26 is configured to operate the actuators 26 during the steering manouevres only when the above mentioned steering signal exceeds a threshold (stored in a memory of the control unit 26) indicative that the actual steering radius is lower than a given value. In this way, the actuators 26 are actually operated only for an intermediate part of the steering manouevre, and/or only for some of the steering manouevres carried out by the vehicle 1. By way of example, the actuators 26 are actually operated only when the steering mechanism 16 cannot achieve a perfect Ackermann steering kinematic, with relatively low steering radiuses, and therefore the front wheels 9 would not be capable of steering with an uniquely defined center of instant rotation.

In any case, other parameters (e.g., the vehicle speed) can be taken into consideration by the control strategies implemented in the control unit 26.

As mentioned above and as shown in figure 4, the vehicle 1 behaves as a three-wheeled vehicle during the steering manoeuvre: according to a preferred embodiment that is not shown, in order to improve the distribution and the support of the loads at the vehicle frontend, it is preferable that the track width between the front wheels 9 is lower than the track width between the rear wheels 10. In other words, the outer front wheel 9b is nearer to the longitudinal symmetry plane 5 than the rear wheels 10, so that the vehicle 1 is stable even if the inner front wheel 9a is completely raised from the ground 27.

With reference to figure 1, the front wheels 9 can be connected to, and disconnected from, the powertrain 11, preferably thanks to a clutch device 30 (schematically shown) that can be manually controlled by the driver and/or automatically controlled by a processing unit, so as to drive the vehicle 1 in a four wheel drive mode or, respectively, in a two-wheel drive mode. In particular, the clutch device 30 is a so-called "4WD clutch" and is arranged along a driveline 31 connecting the powertrain 11 to the wheels 9,10.

According to other exemplary embodiments that are not shown, the clutch device 30 is not provided, so that the vehicle 1 has only a four-wheel drive mode, or has only a two-wheel drive mode.

In the particular embodiment that is schematically shown in the figures, the driveline 31 comprises a shaft 32 operated in rotation by the powertrain 11, a transmission 33 operating the front wheels 9, a transmission 34 operating the rear wheels 10, and a torque split device 35 (schematically shown; e.g.: a differential, a hydraulic device, etc.), splitting the torque of the shaft 32 between the transmissions 33 and 34. Preferably, the clutch device 30 is part of the torque split device 35, or it is arranged between the torque split device 35 and the transmission 33.

The transmissions 33 and 34 define transmission paths arranged in parallel and comprise respective shafts 38,39 and respective differentials 40,41, known and not described in detail: each of the differentials 40,41 splits the torque from the respective shaft 38,39 between the respective wheels 9, 10.

With reference to figure 4, when the front wheels 9 are connected to the powertrain 11 and, therefore, define respective driving wheels, the control unit 26 is configured in such a manner that the outer front wheel 9b is actively rotated by the powertrain 11 notwithstanding the fact that no torque can be transferred from the differential 40 to the ground 27 through the inner front wheel 9a, since the latter is detached from the ground 27. Obviously, this kind of control is not needed in a "two-wheel drive" mode.

In order to achieve this result, many solutions can be implemented. By way of example, when the vertical pressure of the inner front wheel 9a on the ground is reduced, an appropriate control of the control unit 26 locks the differential 40, so that the front wheels 9 run at the same speed, or brakes the rotation of the inner front wheel 9a, e.g. by operating a brake 43 (schematically shown) associated to the rotation of the inner front wheel 9a.

The same result could be achieved by a variant that is not shown, and that comprises a different powertrain having two independent driving motors (e.g. electric motors): in this variant such motors can be operatively connected (by clutches) or they are stably connected, respectively, to the front wheels 9, in order to actively drive the rotation of such front wheels 9; in the meantime, the control unit 26 is configured to control such motors independently from each other in order to rotate the outer front wheel 9b by operating its motor (while the other motor could be inoperative, when the front inner wheel 9a is detached from the ground 27).

As mentioned above, preferably, the rear wheels 10 are stably connected to the powertrain 11 so as to define respective driving wheels; in the four-wheel drive mode, during the steering manoeuvre, the control unit 26 is configured to adjust or set the rotation speed of the outer front wheel 9b and the rotation speed of the rear wheels 10 independently from each other, so as to adapt at least one of such rotation speeds to the actual value of the steering radius and/or to the actual position of the center C; in this way, it is possible to avoid tire slips on the ground, due to a fixed transmission ratio between the transmissions 33 and 34.

In order to achieve this result, many solutions can be implemented. By way of example, in the example that is shown, the control unit 26 is configured to adjust or set the rotation speed of one of the transmissions 33,34 with respect to the rotation speed of the other of the transmissions 33,34 (i.e. to adjust the speed ratio), as a function of a steering signal indicative of the value of a steering radius and/or indicative of the position of the center C, by adjusting such speed ratio in a speed adjusting device 42 (schematically shown) provided along one of the transmissions 33,34 (by way of example, the device 42 includes a gear change device and/or a braking device, which could be even defined by the brakes of the wheels). According to a variant, not shown, the vehicle 1 comprises a different powertrain, comprising two distinct motors or engines, respectively connected to the transmissions 33,34 and independently controlled by the control unit 26 during the steering manoeuvre so as to adjust or set the relative rotation speed as a function of a steering signal indicative of the value of a steering radius and/or indicative of the position of the center C.

According to another preferred aspect of the invention, the relative rotation speed of the rear wheels 10 is adjusted or set under the control of the control unit 26, so as to cooperate with the steering mechanism 16 in defining the steering path and/or the steering radius and/or the steering center C. In other words, the control unit 26 is configured to adjust or set the rotation speed of one of the rear wheels 10 with respect to the rotation speed of the other of the rear wheels 10, e.g. so as to help in setting a desired steering radius and/or a desired position for the center C. This result can be achieved in different manners, e.g.
- by braking or locking the rotation of the inner rear wheel 10a;
- by providing a different powertrain (not shown) having two independent driving motors (e.g. electric motors), stably connected respectively to the rear wheels 10 in order to actively drive the rotation of such rear wheels 10 and controlled by the control unit 26 independently from each other.

Just as an example, rotation of the inner rear wheel 10a can be blocked by the control unit 26 during a steering manoeuvre, when the driver desires a minimum steering radius, in order to set the steering center C just at the contact zone between the ground 27 and the inner rear wheel 10a, while the outer rear wheel 10b receives torque from the powertrain so as to rotate a desired rotation speed.

In view of the foregoing, the advantages of the vehicle 1 and the control method implemented by the control unit 26 are evident.

Indeed, as mentioned above, energy dissipation and tire slippage at the inner front wheel 9a is reduced, thanks to the raising of such inner front wheel 9a with respect to the outer front wheel 9b and, in addition, thanks to the adjustment of the relative rotation speed of the outer front wheel 9b with respect to the rotation speeds of the rear wheels 10.

Moreover, the behaviour of the vehicle 1 is improved, because of the minimized steering radius and minimized damage of the soil surface. In other words, the efficiency of the steering manoeuvre is optimized, and working times and energy dissipations are reduced.

In addition, the invention requires a relatively low number of modifications, with respect to the configurations of common agricultural vehicles: indeed, it is only necessary to provide the actuators 25 in an independent suspension system at the front axle 7, and to provide an appropriate control logic in the control unit 26.

Finally, it is clear that modifications can be made to the vehicle 1 and the corresponding control method, which do not extend beyond the scope of protection as defined by the appended claims.

In particular, the wheels 9,10 may be driven in a manner different from what shown in the attached figures: by way of example, each axle 7,8 or even each wheel 9,10 can be associated with a dedicated driving motor or engine.

## Claims

1. - A vehicle (1), in particular an agricultural vehicle, comprising:
- a chassis (3);
- a front axle (7) comprising:
a) two steerable front wheels (9), and
b) an independent front suspension (20) for each of said front wheels (9),
- a steering mechanism (16) for steering said front wheels (9); during a steering manoeuvre, said front wheels defining an inner front wheel (9a) and an outer front wheel (9b), respectively nearer and farther with respect to a steering center (C);
- a control unit (26) configured to handle said steering manoeuvre;
- a rear axle (8) comprising two rear wheels (10);
- a powertrain arranged to drive at least part of said front and rear wheels (9,10);
**characterized in that**
- said front axle (7) further comprises, for each of said front wheels (9), a respective actuator (25), operable to raise and lower the corresponding front wheel (9) with respect to said chassis (3); and
- said control unit (26) is configured to operate at least one of said actuators (25) in response to a steering signal so as to reduce vertical pressure between the inner front wheel (9a) and the ground (27) during the steering manoeuvre.

2. - The vehicle according to claim 1, wherein said control unit (26) is configured to detach the inner front wheel (9a) from the ground (27) during said steering manouevre.

3. - The vehicle according to claim 1 or 2, said control unit (26) is configured to operate said actuators (25) during the steering manouevres when said steering signal exceeds a threshold indicative of a given steering radius.

4. - The vehicle according to anyone of the previous claims, wherein the track width between said front wheels (9) is lower than the track width between said rear wheels (10).

5. - The vehicle according to anyone of the previous claims, wherein said actuators (25) are integrated in said front suspensions (20), so that said front suspensions are active suspensions.

6. - The vehicle according to anyone of the previous claims, wherein
- said front wheels (9) are driving wheels; and
- said control unit (26) is configured in such a manner that the outer front wheel (9b) is rotated when said inner front wheel (9a) is detached from the ground (27).

7. - The vehicle according to claim 6, wherein
- said front axle (7) comprises a front differential (40) splitting torque between said front wheels (9); and
- in order to cause a rotation of the outer front wheel (9b) when said inner front wheel (9a) is detached from the ground (27), said control unit (26) is configured to block said differential (40) or to block or brake the rotation of said inner front wheel (9a).

8. - The vehicle according to claim 6, wherein
- said powertrain comprises two independent motors that can be operatively connected or are stably connected, respectively, to said front wheels (9); and
- in order to cause a rotation of the outer front wheel (9b) when said inner front wheel (9a) is detached from the ground (27), said control unit (26) is configured to control said motors independently from each other during the steering manoeuvre.

9. - The vehicle according to anyone of claims 6 to 8, wherein
- said rear wheels (10) are driving wheels;
- said control unit (26) is configured to adjust or set the rotation speeds of said outer front wheel (9b) and said rear wheels (10) independently from each other, as a function of the steering signal, which is indicative of the value of a steering radius or indicative of the position of a steering center.

10. - The vehicle according to claim 9, comprising
- a first transmission (33) supplying torque to said front wheels (9);
- a second transmission (34) supplying torque to said rear wheels (10);
wherein said control unit (26) is configured to adjust or set the rotation speed of one of said first and second transmissions (33,34) with respect to the rotation speed of the other of said first and second transmissions (33,34), as a function of the steering signal, which is indicative of the value of a steering radius or indicative of the position of a steering center.

11. - The vehicle according to claim 10, further comprising a transmission device (35) splitting torque from said powertrain (11) between said first and second transmissions (33,34); one of said first and second transmissions (33,34) comprising a speed adjusting device (42) controlled by said control unit (26) so as to vary the relative speed between said first and second transmissions (33,34), as a function of the steering signal.

12. - The vehicle according to claim 10, wherein said powertrain comprises two engines or motors operatively connected to said first and, respectively, second transmissions and independently controlled by said control unit as a function of the steering signal.

13. - The vehicle according to anyone of the previous claims, wherein
- said rear wheels (9) are driving wheels;
- said control unit is configured to adjust or set the rotation speed of one of said rear wheels (10) with respect to the rotation speed of the other of said rear wheels (10) during said steering manoeuvre.

14. - A control method for handling a steering manoeuvre of a vehicle according to anyone of the previous claims, the method comprising the step of reducing vertical pressure between said inner front wheel (9a) and the ground (27) in response to a steering signal, by operating at least one of the actuators (25) during the steering manoeuvre.

15. - The method according to claim 14, wherein said at least one of the actuators (25) is operated to such an extent to detach said inner front wheel (9a) from the ground (27).

16. - The method according to claim 14 or 15, wherein said at least one of the actuators (25) is operated when said steering signal exceeds a threshold indicative of a given steering radius.

17. - The method according to anyone of claims 14 to 16, wherein said outer front wheel (9b) and said rear wheels (10) are driving wheels; and wherein the rotation speed of said outer wheel (10) is adjusted or set independently from the rotation speeds of said rear wheels (10).

18. - The method according to anyone of claims 14 to 17, wherein the rotation speeds of said rear wheels (10) are adjusted or set independently from each other during the steering manoeuvre.
